# DEMANDE DE BREVET EUROPEEN

(11) **EP 3 544 025 A1**
(43) Date de publication de la demande: **25.09.2019**
(21) Numéro de dépôt: 19161809.9
(22) Date de dépôt: 11.03.2019
(51) Int. Cl.: H01B 3/44, H01B 9/02, C08K 3/04

(54) **CÂBLE ÉLECTRIQUE COMPRENANT UNE COUCHE POLYMÉRIQUE FACILEMENT PELABLE**

(30) Priorité: 19.03.2018 FR 1852334
(71) Demandeur: Nexans, 92400 Courbevoie (FR)
(72) Inventeur: KOELBLIN, Christian, 01800 Meximieux (FR); MAUGIN, Melek, 69700 CHASSAGNY (FR); PEREGO, Gabriele, 20144 Milan (IT)
(74) Mandataire: Peguet, Wilfried

(57) **Abrégé**

La présente invention se rapporte à un câble électrique (1) comprenant au moins un conducteur électrique allongé (2), une couche électriquement isolante (4) entourant le conducteur électrique allongé (2), et une couche semi-conductrice (5) entourant la couche électriquement isolante (4), la couche semi-conductrice (5) comprenant au moins une charge conductrice, caractérisé en ce que la couche semi-conductrice comprend au moins un polymère d'éthylène non polaire ayant une température Vicat, selon la norme ISO 306, d'au moins 100°C.

## Description

La présente invention se rapporte à un câble électrique comprenant une couche polymérique facilement pelable, notamment une couche semi-conductrice facilement pelable.

Elle s'applique typiquement, mais non exclusivement, aux domaines des câbles d'énergie à moyenne tension (notamment de 6 à 45-60 kV) ou à haute tension (notamment supérieur à 60 kV, et pouvant aller jusqu'à 800 kV), qu'ils soient à courant continu ou alternatif.

Du document WO 2016/097819 est connu un câble électrique comportant une couche semi-conductrice pelable comprenant notamment un copolymère d'éthylène et d'acétate de vinyle (EVA) en quantité majoritaire, et du noir de carbone.

Toutefois, même si cette couche semi-conductrice est pelable, elle ne présente pas de très bonnes propriétés de résistance à la déformation par des forces mécaniques à température élevée.

Le but de la présente invention est de pallier les inconvénients des techniques de l'art antérieur en proposant un câble électrique comprenant au moins une couche semi-conductrice, présentant une résistance améliorée à la déformation par des forces mécaniques à température élevée, tout en garantissant une très bonne pelabilité.

La présente invention a pour objet un câble électrique comprenant au moins un conducteur électrique allongé, une couche électriquement isolante entourant le conducteur électrique allongé, et une couche semi-conductrice entourant la couche électriquement isolante, la couche semi-conductrice comprenant au moins une charge conductrice, notamment en quantité suffisante pour rendre la couche semi-conductrice, caractérisée en ce que la couche semi-conductrice comprend en outre au moins un polymère d'éthylène non polaire ayant une température Vicat d'au moins 100°C.

Un autre objet de l'invention concerne un câble électrique comprenant au moins un conducteur électrique allongé, une couche électriquement isolante entourant le conducteur électrique allongé, et une couche semi-conductrice entourant la couche électriquement isolante, caractérisée en ce que la couche semi-conductrice est obtenue à partir d'une composition semi-conductrice comprenant :
- au moins un polymère d'éthylène non polaire ayant une température Vicat d'au moins 100°C,
- au moins une charge conductrice, notamment en quantité suffisante pour rendre la composition semi-conductrice.

Grâce à l'invention, la couche semi-conductrice présente de très bonnes propriétés de résistance à la déformation par des forces mécaniques, notamment en configuration opérationnelle du câble à des températures élevées, pouvant être de l'ordre de 100°C ou au-delà.

Plus particulièrement, la couche semi-conductrice du câble de l'invention est en mesure de fonctionner à des températures pouvant être d'au moins de 100°C, en limitant de façon significative, voire en évitant, la déformation de la structure ou géométrie du câble, et garantissant ainsi son bon fonctionnement en configuration opérationnelle.

La couche semi-conductrice présente avantageusement un allongement sous charge à chaud pouvant aller de 0 à 20%, de préférence de 0 à 10%, et de préférence de 0 à 5%.

Dans la présente invention, l'allongement sous charge à chaud est déterminé selon le test de la norme NF EN 60811-507 (Décembre 2012). Ce test est réalisé avec une charge de 0,2 MPa à une température de 110°C.

De préférence, la couche semi-conductrice peut présenter un allongement résiduel selon cette norme compris entre -10% et + 10% (bornes incluses), et de préférence entre -5% et +5% (bornes incluses).

En outre, la couche semi-conductrice présente l'avantage d'être une couche facilement pelable.

Dans la présente invention, la couche semi-conductrice de l'invention est une couche dite « pelable », afin d'avoir notamment facilement accès à la couche sous-jacente ou aux couches sous-jacentes, et/ou au conducteur électrique allongé. A ce titre, la couche semi-conductrice du câble de la présente invention peut avoir une force de pelabilité comprise entre 4 et 45 Newton (N) (bornes incluses), selon la méthode de mesure définie dans la norme IEC 60502-2 (février 2014).

Dans la présente invention, l'expression « non polaire » signifie que le polymère de ce type ne comporte pas de fonctions polaires, telles que par exemple des groupements acétates, acrylates, hydroxyles, nitriles, carboxyles, carbonyles, ou tous autres groupements à caractère polaire bien connus dans l'art antérieur. Ceci exclut notamment les copolymères d'éthylènes du type copolymère d'éthylène et d'acétate de vinyle (EVA), copolymère d'éthylène et de butyle acrylate (EBA), copolymère d'éthylène et d'éthyle acrylate (EEA), copolymère d'éthylène et d'acrylate de méthyle (EMA), ou copolymère d'éthylène et d'acide acrylique (EAA).

Dans la présente invention, la température Vicat, ou en d'autres termes la température de ramollissement Vicat (bien connu sous l'anglicisme *« Vicat softening temperature* »), peut être facilement déterminée selon la norme ISO 306 Méthode A (2013).

Le polymère d'éthylène non polaire de l'invention peut avoir de préférence une température Vicat d'au moins 105°C, de préférence d'au moins 110°C, de préférence d'au moins 115°C, et de façon particulièrement préférée d'au moins 120°C.

La couche semi-conductrice de l'invention est de préférence une couche thermoplastique, ou en d'autres termes une couche non réticulée.

Ainsi, même si le test de la norme NF EN 60811-507 (Décembre 2012) est classiquement utilisé pour une couche réticulée, ce test est également utilisé dans le cadre de l'invention pour déterminer l'allongement sous charge à chaud de la couche semi-conductrice du câble de l'invention, notamment lorsque cette couche est du type thermoplastique.

On entend par « couche non réticulée » ou « couche thermoplastique » une couche dont le taux de gel selon la norme ASTM D2765-01 (extraction au xylène) est d'au plus 20%, de préférence d'au plus 10%, de préférence d'au plus 5%, et de façon particulièrement préférée de 0%.

La couche semi-conductrice du câble électrique de l'invention peut en outre comprendre avantageusement plus de 50,0 % en poids d'un ou de plusieurs polymère(s) d'éthylène non polaire(s), par rapport au poids total de polymère(s) dans la couche semi-conductrice.

La composition semi-conductrice peut en outre comprendre plus de 50,0 % en poids d'un ou de plusieurs polymère(s) d'éthylène non polaire(s), par rapport au poids total de polymère(s) dans la composition semi-conductrice.

Dans la présente invention, le polymère d'éthylène non polaire peut être choisi parmi un homopolymère d'éthylène, un copolymère d'éthylène, et un de leurs mélanges.

De préférence, le polymère d'éthylène non polaire de l'invention, notamment lorsqu'il est un copolymère d'éthylène, peut comprendre au moins 80% en poids d'éthylène, et de préférence au moins 90% en poids d'éthylène, par rapport au poids total du polymère d'éthylène non polaire dans la couche semi-conductrice et/ou dans la composition semi-conductrice.

La quantité d'éthylène dans le polymère d'éthylène non polaire peut être facilement déterminée par des techniques bien connues de l'homme du métier, notamment par spectroscopie RMN (résonance magnétique nucléaire) et/ou spectroscopie IR (infrarouge).

Le polymère d'éthylène non polaire peut être choisi parmi un polymère haute densité (HDPE), un polymère moyenne densité (MDPE), un polymère basse densité (LDPE), un polymère linéaire basse densité (LLDPE), et un de leurs mélanges.

On entend par « haute densité » une densité pouvant aller de 0,941 à 0,965 g/cm³, selon la norme ISO 1183 (à une température de 23°C).

On entend par « moyenne densité » une densité pouvant aller de 0,926 à 0,940 g/cm³, selon la norme ISO 1183 (à une température de 23°C).

On entend par « basse densité » une densité pouvant aller de 0,910 à 0,925 g/cm³, selon la norme ISO 1183 (à une température de 23°C).

Le polymère d'éthylène non polaire peut être obtenu par un procédé de polymérisation dans un réacteur tubulaire à haute pression, ou dans un réacteur autoclave ou dans un réacteur basse pression utilisant un des procédés de polymérisation bien connus dans l'art.

Le polymère d'éthylène non polaire conforme à l'invention peut être un copolymère d'éthylène comprenant un comonomère de type alpha-oléfine, notamment en C₃-C₁₂, de préférence en C₃-C₁₀, et de façon particulièrement préférence en C₄-C₈.

Plus particulièrement, le comonomère de type alpha-oléfine peut être choisi parmi le propylène, le 4-m éthyle-1-pentène, le 1-butène, le 1-hexène, le 1-octène.

En outre, le copolymère d'éthylène non polaire peut comprendre un comonomère de type diène. Le comonomère de type diène peut être choisi parmi l'éthylidène norbornène, le dicylopentadiène, le vinyle norbornène et l'hexadiène 1-4. Ce type de copolymère d'éthylène peut être notamment un terpolymère d'éthylène-propylène, comme par exemple le copolymère d'éthylène, de propylène et de diène (EPDM).

On préférera utiliser comme copolymère d'éthylène, un copolymère d'éthylène et d'hexène, un copolymère d'éthylène et d'octène, et/ou un copolymère d'éthylène et de butène.

Typiquement, le copolymère d'éthylène non polaire peut être obtenu à partir de la copolymérisation de l'éthylène avec ladite alpha-oléfine, en présence d'un catalyseur Ziegler-Natta, d'un catalyseur d'oxyde métallique ou d'un catalyseur à site unique.

On préférera utiliser un catalyseur à site unique comme par exemple un catalyseur métallocène bien connu de l'homme du métier. On appelle couramment un copolymère obtenu par ce type de copolymérisation un copolymère métallocène.

Les copolymères d'éthylène non polaires « métallocènes » ont des structures moléculaires plus régulières (i.e. ayant une distribution de masse moléculaire « étroite », aussi appelé polymère « à faible polydispersité ») ce qui leur confère d'excellentes propriétés mécaniques, notamment un excellent allongement à la rupture, même en présence de charges à des taux importants.

En outre, les copolymères d'éthylène non polaires « métallocènes » ont un degré de pureté plus élevé par rapport aux résidus de catalyseurs se trouvant dans le copolymère après sa fabrication, comparé aux copolymères d'éthylène non polaires obtenus par des procédés de polymérisation utilisant des catalyseurs de type Ziegler-Natta ou oxyde métallique.

Ainsi, les copolymères d'éthylène non polaires métallocènes résistent mieux aux dégradations thermiques (i.e. stress thermique) et au vieillissement par fissuration (connu sous l'anglicisme ESCR pour « *Environmental Stress Cracking Resistance* ») que des copolymères d'éthylène non polaires avec un taux sensiblement identique de cristallinité obtenus par un procédé de copolymérisation différent.

La couche semi-conductrice du câble de l'invention, ou la composition semi-conductrice, peut comprendre un ou plusieurs polymère(s) d'éthylène non polaire(s), pouvant notamment être du type copolymère d'éthylène et d'une alpha-oléfine en C₃-C₁₂, de préférence en C₃-C₁₀, et de façon particulièrement préférence en C₄-C₈.

Selon un mode de réalisation particulier, la couche semi-conductrice, ou la composition semi-conductrice, peut comprendre au moins un premier copolymère d'éthylène non polaire, et au moins un deuxième copolymère d'éthylène non polaire, le premier copolymère d'éthylène non polaire étant plus particulièrement différent du deuxième copolymère d'éthylène non polaire.

Selon une première variante, le premier copolymère d'éthylène est un copolymère d'éthylène et d'une alpha-oléfine en Cₓ, et le deuxième copolymère d'éthylène est un copolymère d'éthylène et d'une alpha-oléfine en C_{y}, avec :
- x et y étant respectivement un nombre entier supérieur ou égal à 1, de préférence supérieur ou égal à 3, et de façon particulièrement préférée supérieur ou égal à 4, et
- x > y.

De préférence, x et y sont des nombres entiers d'au plus 12, de préférence d'au plus 10, et de façon particulièrement préférée d'au plus 8.

Selon une deuxième variante, le premier copolymère d'éthylène est un copolymère d'éthylène et d'une alpha-oléfine en Cₓ, et le deuxième copolymère d'éthylène est un copolymère d'éthylène et d'une alpha-oléfine en C_{y}, avec :
- x et y étant respectivement un nombre entier supérieure ou égal à 1, de préférence supérieur ou égal à 3, et de façon particulièrement préférée supérieur ou égal à 4, et
- x < y.

De préférence, x et y sont des nombres entiers d'au plus 12, de préférence d'au plus 10, et de façon particulièrement préférée d'au plus 8.

Selon une troisième variante, la couche semi-conductrice, ou la composition semi-conductrice, peut comprendre au moins trois copolymères d'éthylène non polaires, lesdits trois copolymères étant des copolymères d'éthylène et d'une alpha-oléfine avec un nombre de carbone différent. Les alpha-oléfines constitutives de ces trois copolymères d'éthylène non polaires peuvent être des alpha-oléfines en C₃-C₁₂, de préférence en C₃-C₁₀, et de façon particulièrement préférence en C₄-C₈.

Dans la présente invention, la couche semi-conductrice, ou la composition semi-conductrice, peut comprendre au moins un polymère d'éthylène non polaire avec une densité allant de 0,926 à 0,940 g/cm³, selon la norme ISO 1183 (à une température de 23°C).

Dans un mode de réalisation préféré, la couche semi-conductrice, ou la composition semi-conductrice, peut comprendre :
- au moins un polymère d'éthylène non polaire du type copolymère d'éthylène et d'hexène, et
- au moins un polymère d'éthylène non polaire du type copolymère d'éthylène et d'octène ou copolymère d'éthylène et de butène.

La couche semi-conductrice de l'invention peut comprendre plus de 50,0 % en poids de polymère(s) d'éthylène non polaire(s), de préférence au moins 70,0 % en poids de polymère(s) d'éthylène non polaire(s), et de façon particulièrement préférée au moins 90,0 % en poids de polymère(s) d'éthylène non polaire(s), par rapport au poids total de polymère(s) dans la couche semi-conductrice. La composition semi-conductrice peut également avoir les mêmes caractéristiques. Dans ce cas, le nombre de % en poids de polymère(s) d'éthylène non polaire(s) est exprimé par rapport au poids total de polymère(s) dans la composition semi-conductrice.

La couche semi-conductrice peut comprendre plus de 50,0 % en poids de polymère(s), de préférence au moins 60% en poids de polymère(s), et de façon particulièrement préférée au moins 70% en poids de polymère(s), par rapport au poids total de la couche semi-conductrice. La composition semi-conductrice peut également avoir les mêmes caractéristiques. Dans ce cas, le nombre de pourcentage en poids de polymère(s) est exprimé par rapport au poids total de la composition semi-conductrice.

Plus particulièrement, la couche semi-conductrice peut comprendre plus de 50,0 % en poids de polymère(s) d'éthylène non polaire(s), de préférence au moins 60% en poids de polymère(s) d'éthylène non polaire(s), et de façon particulièrement préférée au moins 70% en poids de polymère(s) d'éthylène non polaire(s), par rapport au poids total de la couche semi-conductrice. La composition semi-conductrice peut également avoir les mêmes caractéristiques. Dans ce cas, le nombre de pourcentage en poids de polymère(s) d'éthylène non polaire(s) est exprimé par rapport au poids total de la composition semi-conductrice.

Dans la présente invention, la couche sem i-conductrice peut comprendre au moins 20,0 % en poids de polymère(s) d'éthylène non polaire(s) ayant une température Vicat d'au moins 100°C, de préférence au moins 30,0 % en poids de polymère(s) d'éthylène non polaire(s) ayant une température Vicat d'au moins 100°C, par rapport au poids total de la couche semi-conductrice. La composition semi-conductrice peut également avoir les mêmes caractéristiques. Dans ce cas, le nombre de pourcentage en poids de polymère(s) d'éthylène non polaire(s) ayant une température Vicat d'au moins 100°C est exprimé par rapport au poids total de la composition semi-conductrice.

Dans un mode de réalisation particulier de l'invention, la couche semi-conductrice de l'invention peut comprendre au moins 30,0 % en poids de polymère(s) d'éthylène non polaire(s) ayant une température Vicat d'au moins 100°C, de préférence au moins 40,0 % en poids de polymère(s) d'éthylène non polaire(s) ayant une température Vicat d'au moins 100°C, et de façon particulièrement préférée au moins 50,0 % en poids de polymère(s) d'éthylène non polaire(s) ayant une température Vicat d'au moins 100°C, par rapport au poids total de polymère(s) dans la couche semi-conductrice. La composition semi-conductrice peut également avoir les mêmes caractéristiques. Dans ce cas, le nombre de % en poids de polymère(s) d'éthylène non polaire(s) ayant une température Vicat d'au moins 100°C est exprimé par rapport au poids total de polymère(s) dans la composition semi-conductrice.

La couche semi-conductrice du câble de l'invention peut comprendre au plus 40 % en poids de polymère(s) polaire(s), de préférence au plus 30 % en poids de polymère(s) polaire(s), de préférence au plus 20 % en poids de polymère(s) polaire(s), et de façon particulièrement préférée au plus 10% en poids de polymère(s) polaire(s), par rapport au poids total de la couche semi-conductrice. De préférence, la couche semi-conductrice du câble de l'invention ne comprend pas de polymère polaire. La composition semi-conductrice peut également avoir les mêmes caractéristiques. Dans ce cas, le nombre de pourcentage en poids de polymère(s) polaire(s) est exprimé par rapport au poids total de la composition semi-conductrice.

Le ou les polymère(s) polaire(s) peuvent être des polymères comportant des fonctions polaires, telles que par exemple des groupements acétate, acrylate, hydroxyle, nitrile, carboxyle, carbonyle, ester, éther, ou tous autres groupements à caractère polaire bien connus dans l'art antérieur. A titre d'exemple de polymère polaire, on peut citer les copolymères d'éthylènes du type copolymère d'éthylène et d'acétate de vinyle (EVA), copolymère d'éthylène et de butyle acrylate (EBA), copolymère d'éthylène et d'éthyle acrylate (EEA), copolymère d'éthylène et d'acrylate de méthyle (EMA), ou copolymère d'éthylène et d'acide acrylique (EAA).

Plus particulièrement, la couche semi-conductrice du câble de l'invention peut comprendre au plus 40 % en poids, de préférence au plus 20 % en poids, et de façon particulièrement préférée au plus 10% en poids, de polymère(s) polaire(s) choisis parmi les copolymères d'éthylène et d'acétate de vinyle (EVA), les copolymères d'éthylène et de butyle acrylate (EBA), les copolymères d'éthylène et d'éthyle acrylate (EEA), les copolymères d'éthylène et d'acrylate de méthyle (EMA), les copolymères d'éthylène et d'acide acrylique (EAA), et un de leurs mélanges, par rapport au poids total de la couche semi-conductrice. De préférence, la couche semi-conductrice du câble de l'invention ne comprend pas de polymère(s) polaire(s) choisis parmi les copolymères d'éthylène et d'acétate de vinyle (EVA), les copolymères d'éthylène et de butyle acrylate (EBA), les copolymères d'éthylène et d'éthyle acrylate (EEA), les copolymères d'éthylène et d'acrylate de méthyle (EMA), les copolymères d'éthylène et d'acide acrylique (EAA), et un de leurs mélanges. La composition semi-conductrice peut également avoir les mêmes caractéristiques. Dans ce cas, le nombre de pourcentage en poids de polymère(s) polaire(s) est exprimé par rapport au poids total de la composition semi-conductrice.

Dans un mode de réalisation particulier, la couche semi-conductrice du câble de l'invention peut comprendre moins de 10 % en poids, de préférence au plus 5,0 % en poids, et de préférence 0% en poids, de polymère(s) de propylène, notamment du type copolymère(s) de propylène et d'éthylène, par rapport au poids total de la couche semi-conductrice. La composition semi-conductrice peut également avoir les mêmes caractéristiques. Dans ce cas, le nombre de pourcentage en poids de polymère(s) de propylène est exprimé par rapport au poids total de la composition semi-conductrice.

Dans la présente invention, le polymère de propylène, notamment lorsqu'il est un copolymère de propylène, peut comprendre plus de 50% en poids de propylène, et de préférence au moins 80% en poids de propylène, par rapport au poids total du polymère de propylène. La quantité de propylène dans le polymère de propylène peut être facilement déterminée par des techniques bien connues de l'homme du métier, notamment par spectroscopie RMN (résonance magnétique nucléaire) et/ou spectroscopie IR (infrarouge).

Dans la présente invention, on entend par « couche semi-conductrice » une couche dont la conductivité électrique peut être strictement supérieure à 1.10⁻⁸ S/m (Siemens par mètre), de préférence d'au moins 1.10⁻³ S/m, et de préférence peut être inférieure à 1.10³ S/m, mesurée à 25°C en courant continu. La composition semi-conductrice peut également avoir les mêmes caractéristiques.

Dans la présente invention, on entend par « couche électriquement isolante » une couche dont la conductivité électrique peut être d'au plus 1.10⁻⁸ S/m (siemens par mètre), mesurée à 25°C en courant continu.

La couche semi-conductrice a plus particulièrement une conductivité électrique supérieure à celle de la couche électriquement isolante. Plus particulièrement, la conductivité électrique de la couche électriquement isolante peut être au moins 10 fois inférieure à la conductivité électrique de la couche semi-conductrice, de préférence au moins 100 fois inférieure à la conductivité électrique de la couche sem i-conductrice, et de façon particulièrement préférée au moins 1000 fois inférieure à la conductivité électrique de la couche semi-conductrice.

La couche semi-conductrice peut comprendre de 4 à 40% en poids de charge conductrice, de préférence au moins 15% en poids de charge conductrice, et encore plus préférentiellement au moins 25% en poids de charge conductrice, par rapport au poids total de la couche semi-conductrice. La composition semi-conductrice peut également avoir les mêmes caractéristiques. Dans ce cas, le nombre de % en poids de charge conductrice est exprimé par rapport au poids total de la composition semi-conductrice.

La charge conductrice est de préférence une charge électriquement conductrice.

La charge conductrice peut être choisie avantageusement parmi les noirs de carbone, les graphites, et un de leurs mélanges.

Dans un mode de réalisation particulier, la couche semi-conductrice de l'invention peut comprendre en outre un liquide diélectrique et/ou une cire, notamment lorsque la couche électriquement isolante comprend elle-aussi un liquide diélectrique et/ou une cire.

Les liquides électriques pouvant être utilisés dans la présente invention, que ce soit dans la couche électriquement isolante et/ou dans la ou les couche(s) semi-conductrice(s), peuvent être ceux décrits dans la demande WO2017/103509 ou dans la demande WO2017/103511, ces deux demandes étant incorporées par référence dans la présente invention. Plus particulièrement, les constituants du liquide diélectrique et leur nature, ainsi que les quantités de liquide diélectrique utilisées dans les compositions et les quantités des constituants du liquide diélectrique, décrits dans ces deux demandes, peuvent être mis en oeuvre dans la présente invention.

Dans un mode de réalisation particulier, le liquide diélectrique peut comprendre au moins une huile minérale et au moins un composé polaire de type benzophénone, acétophénone ou un de leurs dérivés.

La cire peut être une cire de paraffine, une cire micro-cristalline ou une cire naturelle.

La composition semi-conductrice peut comprendre en outre au moins un agent de protection, tel qu'un antioxydant. Les antioxydants permettent de protéger la composition semi-conductrice du stress thermique engendré lors des étapes de fabrication du câble ou de fonctionnement du câble.

Les antioxydants sont choisis de préférence parmi :
- les antioxydants phénoliques à encombrement stérique, tels que le tetrakisméthylene(3,5-di-*t*-butyl-4-hydroxy-hydrocinnamate) méthane, le octadecyl 3-(3,5-di-*t*-butyl-4-hydroxyphényle)propionate, le 2,2'-thiodiéthylène bis[3-(3,5-di-*t*-butyl-4-hydroxyphényle)propionate], le 2,2'-Thiobis(6-*t*-butyle-4-méthylephénol), le 2,2'-méthylenebis(6-*t*-butyle-4-méthylphénol), le (1,2-Dioxoethylene)bis(iminoethylene) bis(3-(3,5-di-tert-butyl-4-hydroxyphenyl)propionate).
- les thioéthers, tels que le 4,6-bis(octylthiométhyle)-o-crésol, le bis[2-méthyle-4-{3-n-alkyle(C₁₂ ou C₁₄)thiopropionyloxy}-5-*t*-butylphényle]sulfide, le thiobis-[2-*t*-butyl-5-méthyle-4,1-phénylène]bis[3-(dodecyltio)propionate] ;
- les antioxydants à base de soufre, tels que le dioctadecyl-3,3'-thiodipropionate ou le didodecyl-3,3'-thiodipropionate ;
- les antioxydants à base de phosphore tels, que les phosphites ou phosphonates comme par exemple le Tris(2,4-di-*t*-butyl-phényle)phosphite ou le Bis(2,4-di-*t*-butylphényle)pentaerythritol diphosphite ; et
- les antioxydants de type aminé, tels que les phénylène diamines (IPPD ou 6PPD), les diphénylamine styrène, les diphénylamines, les mercapto benzimidazoles et le 2,2,4-trimethyl-1,2 dihydroquinoline polymérisé (TMQ), ce dernier type d'antioxydant étant particulièrement préféré dans la composition semi-conductrice de l'invention.

Les TMQ peuvent avoir différents grades, à savoir :
- un grade dit « standard » avec un faible degré de polymérisation, c'est-à-dire avec un taux de monomère résiduel supérieur à 1% en poids et ayant une teneur en NaCl résiduelle pouvant aller de 100 ppm à plus de 800 ppm (parties par million massiques) ;
- un grade dit « à haut degré de polymérisation » avec un haut degré de polymérisation, c'est-à-dire avec un taux de monomère résiduel inférieur à 1% en poids et ayant une teneur en NaCl résiduelle pouvant aller de 100 ppm à plus de 800 ppm ;
- un grade dit « à faible teneur en sel résiduel » avec une teneur en NaCl résiduelle inférieure à 100 ppm.

Le type de stabilisant et son taux dans la composition semi-conductrice de l'invention sont classiquement choisis en fonction de la température maximale subie par les polymères pendant la production du mélange et pendant la mise en oeuvre par extrusion sur le câble ainsi que selon la durée maximale d'exposition à cette température.

La composition semi-conductrice peut typiquement comprendre de 0,1% à 4% en poids d'antioxydant(s), et de préférence de 0,5% à 2% en poids d'antioxydant(s), par rapport au poids totale de la composition semi-conductrice.

D'autres additifs et/ou d'autres charges bien connus de l'homme du métier peuvent également être ajoutés à la composition semi-conductrice de l'invention, tels que des agents favorisant la mise en oeuvre tels que des lubrifiants; des agents compatibilisants; des agents de couplage ; des stabilisants UV ; des charges non-conductrices ; et/ou des charges minérales sans halogènes destinées à améliorer le comportement au feu de la composition semi-conductrice. De préférence, la composition semi-conductrice de l'invention ne comprend pas d'agent de réticulation, tel que par exemple des peroxydes organiques.

Afin de garantir un câble électrique dit « HFFR » pour l'anglicisme *« Halogen Free Flame Retardant* », le câble de l'invention ne comprend préférentiellement pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

La couche semi-conductrice de l'invention est de préférence une couche extrudée par des techniques bien connues de l'homme du métier.

L'ensemble de la description concernant la couche semi-conductrice du câble électrique de l'invention peut s'appliquer à la couche électriquement isolante du câble électrique de l'invention, excepté le fait que la couche électriquement isolante ne comprend pas de charge conductrice ou bien comprend une quantité de charge conductrice ne rendant pas semi-conductrice la couche électriquement isolante. Ainsi, la couche électriquement isolante peut comprendre moins de 4% en poids de charge conductrice, de préférence moins de 1% en poids de charge conductrice, et encore plus préférentiellement 0% en poids de charge conductrice, par rapport au poids total de la couche électriquement isolante.

Plus particulièrement, la couche électriquement isolante peut comprendre au moins un polymère identique à celui ou ceux compris dans la couche semi-conductrice.

Dans un mode de réalisation particulier, la couche électriquement isolante peut comprendre :
- un ou plusieurs polymère(s) de propylène, et
- optionnellement un ou plusieurs polymère(s) d'éthylène, différent(s) du ou des polymère(s) de propylène.

Les polymères de propylène peuvent être choisis parmi les copolymères de propylène et d'éthylène, tels que par exemples les copolymères hétérophasiques de propylène et d'éthylène et/ou des copolymères statistiques (« *random copolymers* ») de propylène et d'éthylène. Les polymères d'éthylène peuvent être choisis parmi les polymères d'éthylène basse densité (LDPE), tels que par exemples les polymères d'éthylène linéaire basse densité (LLDPE).

Selon une première variante, la couche électriquement isolante peut comprendre au moins un copolymère statistique de propylène et d'éthylène, au moins un copolymère hétérophasique de propylène et d'éthylène, et au moins un polymère d'éthylène basse densité.

Selon une deuxième variante, la couche électriquement isolante peut comprendre au moins un copolymère statistique de propylène et d'éthylène, et un ou plusieurs copolymères hétérophasiques de propylène et d'éthylène.

Le conducteur électrique allongé du câble de l'invention peut être du type monobrins ou multibrins. De préférence, ledit conducteur électrique allongé est en cuivre, en alliage de cuivre, en aluminium, ou en alliage d'aluminium.

Le câble électrique de l'invention peut en outre comprendre une autre couche semi-conductrice entourant le conducteur électrique, et étant entourée par la couche électriquement isolante.

Ainsi, dans ce mode de réalisation, le câble de l'invention peut comprendre au moins un élément électriquement conducteur allongé, notamment positionné au centre du câble :
- entouré par une première couche semi-conductrice, ou en d'autres termes entouré par ladite autre couche semi-conductrice de l'invention,
- la première couche semi-conductrice étant entourée par une couche électriquement isolante, ou en d'autres termes entourée par ladite couche électriquement isolante de l'invention, et
- la couche électriquement isolante étant entourée par une deuxième couche semi-conductrice, la deuxième couche semi-conductrice de ce mode de réalisation étant la couche semi-conductrice telle que décrite dans la présente invention.

Ainsi, la première couche semi-conductrice, la couche électriquement isolante et la deuxième couche semi-conductrice constituent une isolation tricouche. Plus particulièrement, la première couche semi-conductrice est directement en contact physique avec la couche électriquement isolante, et la deuxième couche semi-conductrice est directement en contact physique avec la couche électriquement isolante.

Les couches électriquement isolante et semi-conductrice(s) du câble électrique de l'invention peuvent être obtenues par extrusion successive ou par co-extrusion.

Préalablement à l'extrusion de ces couches autour d'au moins un conducteur électrique, l'ensemble des constituants nécessaires à la formation de ces couches peut être dosé et mélangé dans un mélangeur en continu de type co-malaxeur BUSS, extrudeuse bi-vis ou un autre type de mélangeur approprié pour des mélanges polymères, notamment chargés. Le mélange peut être ensuite extrudé sous forme de joncs, puis refroidi et séché pour être mis sous forme de granulés, ou alors le mélange peut être mis directement sous forme de granulés, par des techniques bien connues de l'homme du métier. Ces granulés peuvent être ensuite introduits au sein d'une extrudeuse mono-vis afin d'extruder et de déposer la composition autour du conducteur électrique pour former la couche en question.

Les différentes compositions peuvent être extrudées les unes à la suite des autres pour entourer de façon successive le conducteur électrique, et ainsi former les différentes couches du câble électrique de l'invention.

Elles peuvent alternativement être extrudées concomitamment par co-extrusion à l'aide d'une unique tête d'extrudeuse, la co-extrusion étant un procédé bien connu de l'homme du métier.

Que ce soit dans l'étape de formation des granulés ou dans l'étape d'extrusion sur câble, les conditions opératoires sont bien connues de l'homme du métier. Notamment, la température au sein du dispositif de mélange ou d'extrusion peut être supérieure à la température de fusion du polymère majoritaire ou du polymère ayant la température de fusion la plus élevée, parmi les polymères utilisés dans la composition à mettre en oeuvre.

Le câble électrique de l'invention peut comprendre en outre un écran métallique entourant la couche semi-conductrice du câble de l'invention, la couche semi-conductrice du câble de l'invention étant celle qui entoure la couche électriquement isolante.

Cet écran métallique peut être un écran dit « filaire », composé d'un ensemble de conducteurs en cuivre ou aluminium arrangé autour et le long du de la couche semi-conductrice, un écran dit « rubané » composé d'un ou de plusieurs rubans métalliques conducteurs posé(s) en hélice autour de la couche semi-conductrice, ou d'un écran dit « étanche » de type tube métallique entourant la couche semi-conductrice. Ce dernier type d'écran permet notamment de faire barrière à l'humidité ayant tendance à pénétrer le câble électrique en direction radiale.

Tous les types d'écran métalliques peuvent jouer le rôle de mise à la terre du câble électrique et peuvent ainsi transporter des courants de défaut, par exemple en cas de court-circuit dans le réseau concerné.

En outre, le câble électrique de l'invention peut comprendre une gaine extérieure de protection entourant la couche semi-conductrice du câble de l'invention, ou bien entourant plus particulièrement ledit écran métallique lorsqu'il existe. Cette gaine extérieure de protection peut être réalisée classiquement à partir de matériaux thermoplastiques appropriées tels que des HDPE, des MDPE ou des LLDPE; ou encore des matériaux retardant la propagation de la flamme ou résistant à la propagation de la flamme. Notamment, si ces derniers matériaux ne contiennent pas d'halogène, on parle de gainage de type HFFR (pour l'anglicisme « *Halogen Free Flame Retardant »).*

D'autres couches, telles que des couches gonflantes en présence d'humidité, peuvent être ajoutées entre la couche semi-conductrice et l'écran métallique lorsqu'il existe, et/ou entre l'écran métallique et la gaine extérieure lorsqu'ils existent, ces couches permettant d'assurer l'étanchéité longitudinale du câble électrique à l'eau. Le conducteur électrique du câble de l'invention peut également comprendre des matières gonflantes en présence d'humidité pour obtenir une « âme étanche ».

Un autre objet de l'invention concerne une composition semi-conductrice comprenant :
- au moins un polymère d'éthylène non polaire ayant une température Vicat d'au moins 100°C,
- plus de 50,0 % en poids d'un ou de plusieurs polymère(s) d'éthylène non polaire(s), par rapport au poids total de polymère(s) dans la composition semi-conductrice, et
- au moins une charge conductrice, notamment en quantité suffisante pour rendre la composition semi-conductrice.

Cette composition semi-conductrice peut s'appliquer plus particulièrement au domaine des câbles électriques, et notamment peut être utilisée pour fabriquer une couche semi-conductrice d'un câbles électrique tel que décrit dans l'invention.

La composition semi-conductrice de cet autre objet peut être avantageusement la composition semi-conductrice telle que décrite dans la présente invention.

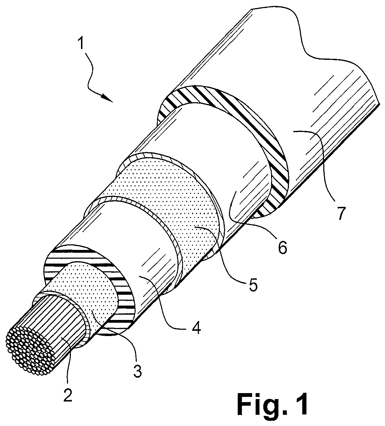

D'autres caractéristiques et avantages de la présente invention apparaîtront à la lumière de la description d'un exemple non limitatif d'un câble électrique selon l'invention fait en référence à la figure 1 représentant une vue schématique en perspective et en coupe d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble d'énergie 1 à moyenne ou haute tension, illustré dans la figure 1, comprend un élément électriquement conducteur 2 central allongé, notamment en cuivre ou en aluminium, et, successivement et coaxialement comprend autour de cet élément 2, une première couche semi-conductrice 3 dite « couche semi-conductrice interne », une couche électriquement isolante 4, une deuxième couche semi-conductrice 5 dite «couche semi-conductrice externe », un écran métallique 6 du type tube cylindrique, et une gaine extérieure de protection 7.

La couche semi-conductrice externe 5 de la figure 1 est une couche semi-conductrice selon l'invention.

Dans le câble de la figure 1, les couches 3, 4 et 5 sont typiquement des couches polymériques extrudées.

La présence de l'écran métallique 6 et de la gaine extérieure de protection 7 est préférentielle, mais non essentielle, cette structure de câble étant en tant que telle bien connue de l'homme du métier.

### Exemples :

Afin de montrer les propriétés de l'invention, des couches semi-conductrices ont été réalisées à partir des compositions semi-conductrices rassemblées dans le tableau 1 ci-dessous.

Les couches semi-conductrices ainsi réalisées sont des couches thermoplastiques (i.e. non réticulées).

Les différents constituants du tableau 1 sont exprimés en pourcentage (%) en poids par rapport au poids total de la composition semi-conductrice.

Les compositions semi-conductrices Cl1 à Cl4 sont des compositions permettant d'obtenir des couches semi-conductrices conformes à l'invention, tandis que les compositions semi-conductrices CC1 et CC2 sont des compositions permettant d'obtenir des couches semi-conductrices comparatives.

L'ensemble des compositions semi-conductrices rassemblées dans le tableau 1 ont sensiblement la même conductivité électrique.

**Tableau 1**

| | CI1 | CI2 | CI3 | CI4 | CC1 | CC2 |
|---|---|---|---|---|---|---|
| C6-MDPE | 40,0 % | 40,6 % | 30,7 % | 37,0 % | 13,0 % | 0 % |
| C8-POE | 0 % | 17,4 % | 15,0 % | 0 % | 0 % | 46,0 % |
| C4-LLDPE | 31,0 % | 0 % | 15,3 % | 6,0 % | 0 % | 15,00 % |
| EVA | 0 % | 0 % | 0 % | 21,0 % | 51,0 % | 0 % |
| Charge conductrice 1 | 27,0 % | 0 % | 0 % | 0 % | 0 % | 0 % |
| Charge conductrice 2 | 0 % | 40,0 % | 37,0 % | 34,0 % | 34,0 % | 37,0 % |
| Antioxydant | 2,0 % | 2,0 % | 2,0 % | 2,0 % | 2,0 % | 2,0 % |

L'origine des constituants rassemblés dans le tableau 1 est la suivante :
- C6-MDPE : copolymère d'éthylène et d'hexène, commercialisé par la société Inéos sous la référence LL6910LA, avec une densité de 0,936 g/cm³ et une température Vicat de 121 °C; ce copolymère comprend au moins 80% en poids d'éthylène par rapport au poids total dudit copolymère ;
- C8-POE : copolymère d'éthylène et d'octène, commercialisé par la société Boréalis sous la référence Queo 1001, avec une densité de 0,910 g/cm³ et une température Vicat de 93 °C;
- C4-LLDPE : copolymère d'éthylène et de butène, commercialisé par la société Versalis sous la référence Flexirène CL 10, avec une densité de 0,918 g/cm³ et une température Vicat de 97°C;
- EVA : copolymère d'éthylène et d'acétate de vinyle, commercialisé par la société EXXON sous la référence Escorene Ultra 00728;
- Charge conductrice 1 : noir de carbone, commercialisé par la société Cabot, sous la référence Vulcan XC-500;
- Charge conductrice 2 : noir de carbone, commercialisé par la société Birla Carbon, sous la référence Conductex 7095 Ultra, la conductivité électrique intrinsèque de la charge conductrice 2 est inférieure à celle de la charge conductrice 1;
- Antioxydant : antioxydant phénolique à encombrement stérique.

L'ensemble des constituants des différentes compositions semi-conductrices du tableau 1 peut être mélangé dans un mélangeur en continu de type co-malaxeur BUSS, extrudeuse bi-vis ou un autre type de mélangeur approprié pour des mélanges thermoplastiques chargés.

Classiquement, dans le mélangeur en continu, les matières polymères sont mises en fusion, les autres constituants du mélange sont introduits et dispersés dans la matrice polymérique fondue, et le mélange homogénéisé. La température du mélangeur est autour de 170°C.

Des granulés peuvent ensuite être formés par des techniques bien connues de l'homme du métier. Ces granulés peuvent être utilisés pour former, à l'aide d'une extrudeuse mono-vis, une couche extrudée du type couche électriquement isolante, autour d'au moins un conducteur électrique du câble de l'invention. La température au sein de l'extrudeuse peut aller de 110° C à 190°C. Une co-extrusion de la couche électriquement isolante avec la ou les couches semi-conductrices du câble électrique de l'invention peut également être réalisée.

A partir des granulés ainsi formés, plusieurs tests ont été réalisés afin de déterminer les propriétés suivantes :
- l'allongement sous charge à chaud, et l'allongement résiduel, et
- la pelabilité.

### Test d'allongement sous charge à chaud et d'allongement résiduel

Pour le test d'allongement sous charge à chaud, les granulés ont été extrudés en bande d'épaisseur comprise entre 0,8 millimètre (mm) et 2 mm, avec une largeur supérieure à 12,5 mm.

L'allongement sous charge à chaud est déterminé selon le test de la norme NF EN 60811-507 (Décembre 2012).

Ce test est réalisé à une température de 110° C avec une charge de 0,2 MPa (20 N.m²), dans les conditions suivantes :
a. Trois éprouvettes de type haltère H2 (dont la longueur totale est de 75 mm) par composition à tester sont préparées, à partir des rubans obtenus ci-avant, en plaçant une charge de 0,2 MPa à l'une de leur extrémité.
b. Ces éprouvettes sont mises en place dans un four à une température de 110°C pendant 15 minutes.
c. L'allongement sous charge à chaud est mesurée (variation d'allongement entre l'éprouvette non chargée avant l'étape a et l'éprouvette chargée après l'étape b.
d. La charge de 0,2 MPa est ensuite retirée et les éprouvettes sont chauffées à une température de 110°C pendant 5 minutes.
e. On laisse refroidir les éprouvettes à température ambiante, puis l'allongement résiduel est mesuré (variation d'allongement entre l'éprouvette non chargée avant l'étape a et l'éprouvette non chargée après l'étape d.

Le test est validé lorsque la valeur de l'allongement sous charge à chaud est comprise entre 0 et 20% (bornes incluses), de préférence entre 0 et 10 % (bornes incluses), et de de préférence entre 0 et 5 % (bornes incluses).

De préférence, la valeur de l'allongement résiduel peut être comprise entre -10% et + 10% (bornes incluses), et de préférence entre -5% et + 5% (bornes incluses).

### Test de pelabilité sur plaque

Le test de pelabilité sur plaque est réalisé dans les conditions suivantes :

### - Préparation d'une couche électriquement isolante :

Une composition électriquement isolante dite de « référence » comprenant un copolymère statistique de propylène et d'éthylène (P1), un copolymère hétérophasique de propylène et d'éthylène (P2), un polymère d'éthylène basse densité (P3), un liquide diélectrique, et un antioxydant, est mélangée selon le procédé tel que tel décrit ci-avant avec un mélangeur en continu, puis des granulés sont formés par des techniques bien connues de l'homme du métier.

Ces granulés sont ensuite mis sous presse pour former des plaques circulaires, à l'aide d'une presse chauffante DK 60, selon les conditions rassemblées dans le tableau 2 ci-dessous, les étapes 1 à 4 étant mises en oeuvre successivement :

**Tableau 2**

| Etapes | Etape 1 | Etape 2 | Etape 3 | Etape 4 |
|---|---|---|---|---|
| Température de la presse | 180 | 180 | 180 | 50 |
| Force de fermeture de la presse (tonne) | 3 | 6 | 6 | 6 |
| Durée (minutes) | 4 | 1 | 0,5 | 4 |

Une fois l'étape 4 réalisée, la plaque circulaire est démoulée puis refroidie à température ambiante. Elle a une épaisseur comprise entre 0,5 et 1,5 mm.

### - Préparation d'une couche semi-conductrice :

Les granulés obtenus à partir des compositions du tableau 1 sont mis sous presse pour former des plaques circulaires, à l'aide d'une presse chauffante DK 60, selon les conditions rassemblées dans le tableau 3 ci-dessous, les étapes 1 à 4 étant mises en oeuvre successivement :

**Tableau 3**

| Etapes | Etape 1 | Etape 2 | Etape 3 | Etape 4 |
|---|---|---|---|---|
| Température de la presse | 180 | 180 | 180 | 50 |
| Force de fermeture de la presse (tonne) | 3 | 8 | 8 | 8 |
| Durée (minutes) | 4 | 1 | 0,5 | 4 |

Une fois l'étape 4 réalisée, la plaque circulaire est démoulée puis refroidie à température ambiante. Elle a une épaisseur comprise entre 0,5 et 1,5 mm.

### - Préparation d'un bi-couche :

Une première plaque circulaire de couche électriquement isolante et une deuxième plaque circulaire de couche semi-conductrice obtenues ci-avant sont positionnées l'une sur l'autre pour former un bi-couche, et positionnées dans une presse chauffante DK 60, selon les conditions rassemblées dans le tableau 4 ci-dessous, les étapes 1 à 3 étant mises en oeuvre successivement :

**Tableau 4**

| Etapes | Etape 1 | Etape 2 | Etape 3 |
|---|---|---|---|
| Température de la presse | 190 | 190 | 50 |
| Force de fermeture de la presse (tonne) | 2 | 3 | 3 |
| Durée (minutes) | 4 | 2 | 4 |

Lors de la préparation du bi-couche, avant sa mise sous presse, un film de polyester est positionné entre une partie des deux couches afin de pouvoir ensuite réaliser le test de pelabilité en séparant facilement la partie des deux couches séparées par ledit film.

Une fois l'étape 3 réalisée, le bi-couche est démoulé puis refroidi à température ambiante. Il a une épaisseur comprise entre 1 et 3 mm.
- Réalisation du test de pelabilité à l'aide d'une machine de traction Alpha Technologies T2000, comprenant les étapes suivantes :
   ∘ Des rectangles de 200 mm sur 10 mm sont découpés dans le bi-couche circulaire.
   ∘ Environ 25 mm de longueur de la couche semi-conductrice des 200 mm du bi-couche sont séparé de la couche électriquement isolante, grâce au film polyester positionné préalablement dans une partie du bi-couche pour obtenir la séparation du bi-couche dans cette partie.
   ∘ L'extrémité de la partie de la couche semi-conductrice séparée est fixée à un moyen de préhension non mobile de la machine de traction, tandis que l'extrémité de la partie de la couche électriquement isolante séparée est fixée à un moyen de préhension mobile de la machine de traction.
   ∘ La force nécessaire pour la séparation de la couche semi-conductrice à partir de la couche électriquement isolante est mesurée sur une distance de séparation d'au moins 100 mm avec un angle de 180° et une vitesse de traction de 250 +/-50 mm/min.
   ∘ Cinq échantillons sont testés par chaque bi-couche formé.

Le test de pelabilité sur plaque est validé lorsque la force de pelabilité est comprise entre 2 et 30 Newton (N) (bornes incluses).

### Résultats :

Les résultats sont rassemblés dans le tableau 5 ci-dessous.

**Tableau 5**

| | CI1 | CI2 | CI3 | CI4 | CC1 | CC2 |
|---|---|---|---|---|---|---|
| Allongement sous charge à 110°C (0,2 MPa) (%) | +2,5 % | +2,5 % | +2,5 % | 0,0 % | Rupture | + 15 % |
| Allongement résiduel (%) | 0,0 % | 0,0 % | -2,5 % | 0,0 % | / | 11,7 % |
| Force de pelabilité (N) | 7,1 N | 10,3 N | 3,8 N | 2,2 N | 1,7 N | 4,6 N |

Ainsi, les couches (i.e. bandes extrudées) obtenues à partir des compositions de l'invention Cl1 à Cl4 présentent un allongement sous charge à chaud bien meilleur que celui de la couche (i.e. bande extrudée) obtenue à partir de la composition CC2 à base de polymères non polaires. En outre, la couche obtenue à partir de la composition CC1 à base d'EVA majoritaire n'a pu passer le test d'allongement sous charge à chaud puisqu'il y a eu rupture de l'échantillon avant que le test ne puisse se terminer.

### Test de pelabilité sur câble

Le test de pelabilité sur câble est réalisé selon la méthode définie dans la norme IEC 60502-2 (février 2014).

Le test de pelabilité sur câble est validé lorsque la force de pelabilité est comprise entre 4 et 45 Newton (N) (bornes incluses).

Les compositions utilisées pour le test de pelabilité sur plaque sont identiques à celles utilisées pour le test de pelabilité sur câble, excepté la partie concernant la formation de plaque et du bi-couche.

Lorsque les granulés sont obtenus, ils sont en effet non pas mis sous forme de plaques, mais incorporés dans une extrudeuse pour former une couche extrudée.

Plus particulièrement, le câble électrique préparé pour le test de pelabilité sur câble comprend un conducteur électrique central en aluminium d'une section de 400 mm² entouré par les couches successives suivantes :
- une première couche semi-conductrice d'une épaisseur de 0,7 mm, obtenue à partir des granulés d'une composition semi-conductrice commercialement disponibles,
- une couche électriquement isolante d'une épaisseur de 6,8 mm, obtenue à partir des granulés de la composition de référence décrite dans le test de pelabilité sur plaque, et
- une deuxième couche semi-conductrice d'une épaisseur de 1,25 mm, obtenue à partir des granulés de la composition selon l'invention, tels que décrit dans le test de pelabilité sur plaque.

Le câble électrique obtenu avec l'isolation tri-couche a un diamètre externe de 41 mm.

Ces trois couches sont obtenus par co-extrusion, à l'aide respectivement de trois extrudeuses monovis, ces trois extrudeuses étant reliée à leur sortie par une même tête d'extrudeuse, ce procédé étant bien connu de l'homme du métier.

A partir du câble ainsi formé, le test de pelabilité selon la norme IEC 60502-2 (février 2014) est utilisée dans les conditions suivantes :
- angle de traction : 180°,
- largeur des bandes de test : 10 mm, et
- vitesse de traction : 250 m/min.

Les forces de pelabilité obtenues respectivement avec les compositions de l'invention du tableau 1 sont avantageusement comprises entre 4 et 45 Newton (N).

## Revendications

1. Câble électrique (1) comprenant au moins un conducteur électrique allongé (2), une couche électriquement isolante (4) entourant le conducteur électrique allongé (2), et une couche semi-conductrice (5) entourant la couche électriquement isolante (4), la couche semi-conductrice (5) comprenant au moins une charge conductrice, **caractérisé en ce que** la couche semi-conductrice comprend en outre au moins un polymère d'éthylène non polaire ayant une température Vicat, selon la norme ISO 306, d'au moins 100°C.

2. Câble selon la revendication 1, **caractérisé en ce que** ledit polymère d'éthylène non polaire comprend au moins 80% en poids d'éthylène par rapport au poids total du polymère d'éthylène.

3. Câble selon la revendication 1 ou 2, **caractérisé en ce que** la couche semi-conductrice comprend plus de 50,0 % en poids d'un ou de plusieurs polymère(s) d'éthylène non polaire(s), par rapport au poids total de polymère(s) dans la couche semi-conductrice.

4. Câble selon l'une quelconque des revendications précédentes, **caractérisé en ce que** le polymère d'éthylène non polaire est choisi parmi un homopolymère d'éthylène, un copolymère d'éthylène, et un de leurs mélanges.

5. Câble selon l'une quelconque des revendications précédentes, **caractérisé en ce que** la couche semi-conductrice comprend un ou plusieurs polymère(s) d'éthylène non polaire(s) du type copolymère d'éthylène et d'une alpha-oléfine en C₃-C₁₂, de préférence en C₃-C₁₀, et de façon particulièrement préférence en C₄-C₈.

6. Câble selon l'une quelconque des revendications précédentes, **caractérisé en ce que** la couche semi-conductrice comprend au moins un premier copolymère d'éthylène non polaire, et au moins un deuxième copolymère d'éthylène non polaire.

7. Câble selon l'une quelconque des revendications précédentes, **caractérisé en ce que** la couche semi-conductrice comprend au moins un polymère d'éthylène non polaire avec une densité allant de 0,926 à 0,940 g/cm³.

8. Câble selon l'une quelconque des revendications précédentes, **caractérisé en ce que** la couche semi-conductrice comprend :
- au moins un polymère d'éthylène non polaire du type copolymère d'éthylène et d'hexène, et
- au moins un polymère d'éthylène non polaire du type copolymère d'éthylène et d'octène ou copolymère d'éthylène et de butène.

9. Câble selon l'une quelconque des revendications précédentes, **caractérisé en ce que** la couche semi-conductrice comprend plus de 50,0 % en poids de polymère(s) par rapport au poids total de la couche semi-conductrice.

10. Câble selon l'une quelconque des revendications précédentes, **caractérisé en ce que** la couche semi-conductrice comprend plus de 50,0 % en poids de polymère(s) d'éthylène non polaire(s) par rapport au poids total de la couche semi-conductrice.

11. Câble selon l'une quelconque des revendications précédentes, **caractérisé en ce que** la couche semi-conductrice comprend au moins 20,0 % en poids de polymère(s) d'éthylène non polaire(s) ayant une température Vicat d'au moins 100°C, par rapport au poids total de la couche semi-conductrice.

12. Câble selon l'une quelconque des revendications précédentes, **caractérisé en ce que** la couche semi-conductrice comprend au moins 30,0 % en poids de polymère(s) d'éthylène non polaire(s) ayant une température Vicat d'au moins 100°C, par rapport au poids total de polymère(s) dans la couche semi-conductrice.

13. Câble selon l'une quelconque des revendications précédentes, **caractérisé en ce que** de la couche semi-conductrice comprend de 4 à 40% en poids de charge conductrice par rapport au poids total de la couche semi-conductrice.

14. Câble selon l'une quelconque des revendications précédentes, **caractérisé en ce que** la couche semi-conductrice est une couche thermoplastique.

15. Câble électrique (1) comprenant au moins un conducteur électrique allongé (2), une couche électriquement isolante (4) entourant le conducteur électrique allongé (2), et une couche semi-conductrice (5) entourant la couche électriquement isolante (4), **caractérisé en ce que** la couche semi-conductrice (5) est obtenue à partir d'une composition semi-conductrice comprenant au moins un polymère d'éthylène non polaire ayant une température Vicat, selon la norme ISO 306, d'au moins 100°C, et au moins une charge conductrice.

16. Câble selon l'une quelconque des revendications précédentes, **caractérisé en ce que** le câble comprend en outre une autre couche semi-conductrice (3) entourant le conducteur électrique (2), et étant entourée par la couche électriquement isolante (4).

17. Composition semi-conductrice comprenant :
- au moins un polymère d'éthylène non polaire ayant une température Vicat, selon la norme ISO 306, d'au moins 100°C,
- plus de 50,0 % en poids d'un ou de plusieurs polymère(s) d'éthylène non polaire(s), par rapport au poids total de polymère(s) dans la composition semi-conductrice, et
- au moins une charge conductrice.
